# EUROPÄISCHE PATENTSCHRIFT

(11) **EP 1 833 716 B1**
(45) Veröffentlichungstag und Bekanntmachung des Hinweises auf die Patenterteilung: **15.02.2012**
(21) Anmeldenummer: 05850452.3
(22) Anmeldetag: 13.12.2005
(51) Int. Cl.: B62D 5/04, B62D 6/00

(54) **VORRICHTUNG UND VERFAHREN ZUR KRAFTBEAUFSCHLAGUNG EINER LENKEINRICHTUNG**
DEVICE AND METHOD FOR POWERING A STEERING DEVICE
SYSTEME ET PROCEDE POUR SOUMETTRE UN DISPOSITIF DE DIRECTION A L'ACTION D'UNE FORCE

(30) Priorität: 27.12.2004 DE 102004062818
(43) Veröffentlichungstag der Anmeldung: 19.09.2007
(73) Patentinhaber: ROBERT BOSCH GMBH, 70442 Stuttgart (DE)
(72) Erfinder: KNEE, Werner, 73728 Esslingen (DE); SCHICK, Jens, 71083 Herrenberg (DE); WUERZ-WESSEL, Alexander, 70599 Stuttgart (DE); SICKERT, Stefan, 71638 Ludwigsburg (DE)
(86) Internationale Anmeldenummer: PCT/EP2005/056755
(87) Internationale Veröffentlichungsnummer: WO 2006/069914

(56) Entgegenhaltungen:
- EP-A- 0 207 604
- EP-A- 1 031 491
- EP-A- 1 319 576
- EP-A- 1 431 128
- EP-A- 1 437 289
- EP-A- 1 500 574
- EP-A1- 0 941 911
- EP-A2- 1 116 640
- EP-A2- 1 293 413
- DE-A1- 10 260 261
- DE-A1- 19 926 341
- FR-A1- 2 843 497

## Beschreibung

Die Erfindung betrifft eine Vorrichtung zur Kraftbeaufschlagung einer Lenkeinrichtung, insbesondere eines Kraftfahrzeugs, gemäß dem Oberbegriff des Anspruchs 1, sowie ein entsprechendes Verfahren gemäß dem Oberbegriff des Anspruchs 7.

### Stand der Technik

Vorrichtungen zur Kraftbeaufschlagung einer Lenkeinrichtung, insbesondere der Lenkeinrichtung eines Kraftfahrzeugs, sind bekannt. Sie werden insbesondere in Verbindung mit Fahrassistenzsystemen eingesetzt, die der Führung eines Kraftfahrzeugs auf einer definierten Fahrbahnspur dienen. Dabei wird die Spur mit Sensorsystemen vermessen. Anhand der gewonnenen Ergebnisse kann dann beispielsweise ein Verlassen der Spur detektiert oder ein Zeitpunkt extrapoliert werden, an dem das Kraftfahrzeug die Spur ohne weiteren Eingriff verlassen würde. Aus den gewonnenen Daten lassen sich Möglichkeiten ableiten, den Fahrer mit Hinweisen oder auch durch einen aktiven Eingriff zu unterstützen. Hinweise werden gemäß dem Stand der Technik beispielsweise über einen Lautsprecher oder durch ein Vibrieren der Sitzfläche auf der Fahrerseite gegeben. Diese Verfahren warnen den Fahrer zwar, zeigen ihm aber nicht ausreichend schnell an, welche Maßnahmen zur Abwendung der möglichen Gefahrensituation einzuleiten sind. So ist beispielsweise einem Fahrer, der in einen Sekundenschlaf gefallen und über eine Begrenzungslinie gefahren ist, im Moment des Warnhinweises nicht klar, wie stark und in welche Richtung eine das Kraftfahrzeug zur Spur zurückführende Lenkbewegung erfolgen muss. Um diesen Nachteil zu beheben, können Stellmotoren eingesetzt werden, die mechanisch mit einer Lenksäule der Lenkeinrichtung verbunden sind. Erkennen die Sensoren beispielsweise, dass das Fahrzeug die Spur nach rechts verlässt, so wird mittels des Motors eine Kraft beziehungsweise ein Drehmoment auf die Lenksäule ausgeübt, um den Lenkwinkel nach links zu ändern und das Fahrzeug wieder zur Spur zurückzuführen. Dabei ist es jedoch nachteilig, dass Fehler im Motor oder in der Ansteuerung des Motors die Lenksäule mit einem ungewünschten Fehlermoment beaufschlagen können, was zu einer Gefährdung der Querdynamik führen kann. Außerdem stellt der Motor mit seiner eigenen Drehmassenträgheit, insbesondere bei einer großen Übersetzung, zu einer störenden Veränderung des Lenkgefühls, was für den Fahrzeugführer inakzeptabel ist. Es verbleibt demnach der Wunsch nach einer Vorrichtung, die das Lenkgefühl nur unwesentlich oder gar nicht beeinflusst und bei einer Fehlfunktion kein Gefahrenrisiko darstellt.

DE 19926341 offenbart ein Verfahren zur Kraftbeaufschlagung einer Lenkeinrichtung, wobei ein an der Lenkeinrichtung angeordnetes, mindestens einen elektromagnetisch beeinflussbaren Bereich aufweisendes regenelement von einer eine elektromagnetische Kraft erzeugenden Wirkvorrichtung verlagert wird.

### Vorteile der Erfindung

Für eine Vorrichtung zur Kraftbeaufschlagung einer eine Lenksäule aufweisenden Lenkeinrichtung, insbesondere eines Kraftfahrzeugs, aufweisend eine der Lenkeinrichtung zugeordnete Wirkvorrichtung und ein an der Lenkeinrichtung angeordnetes oder ihr zugehöriges Gegenelement, wobei die Wirkvorrichtung eine eine elektromagnetische Kraft auf das Gegenelement bewirkende Induktionsanordnung aufweist, wobei das Gegenelement mindestens einen elektromagnetisch beeinflussbaren Bereich aufweist, sodass eine das Gegenelement gegenüber der Wirkvorrichtung verlagernde Kraft bewirkt werden kann zur Kraftbeaufschlagung der Lenkeinrichtung, und wobei ein Energiespeicher als ein Kondensator ausgeführt ist, aus dem die elektrische Speisung der Induktionsanordnung erfolgt, wird erfindungsgemäß vorgeschlagen, dass der Kondensator eine auf eine maximal gewünschte Wirkung der Vorrichtung abgestimmte Kapazität derart aufweist, dass die Kraftbeaufschlagung der Lenkeinrichtung auf eine maximale Zeitdauer von einer bis fünf Sekunden und/oder auf eine maximale Änderung des Lenkwinkels von 10 bis 50 Grad begrenzt ist, dass die Induktionsanordnung mehrere Spulen aufweist, die nur entlang eines zur Längssäule im Wesentlichen konzentrischen, die Größe der maximalen Änderung des Lenkwinkels aufweisenden Kreisbogens angeordnet sind, und dass das Gegenelement an der Lenksäule angeordnet ist. Die Wirkvorrichtung ist dabei an einem gegenüber den beweglichen Teilen der Lenkeinrichtung ortsfesten Teil (oder Teilen) des Kraftfahrzeugs angeordnet, während das Gegenelement derart an der Lenkeinrichtung angeordnet ist, dass eine räumliche Verlagerung des Gegenelements, sei es eine Verlagerung entlang einer Geraden/einer Kurve oder auch eine Rotation um eine Achse, eine Kraftbeaufschlagung der Lenkeinrichtung bewirkt. Insbesondere kann eine starre Verbindung zwischen dem Gegenelement und der Lenkeinrichtung gewählt werden. Ist die Wirkvorrichtung inaktiv geschaltet, das heißt, sie übt keine elektromagnetische Kraft auf das Gegenelement aus, ist das Gegenelement von der Wirkvorrichtung entkoppelt. Dies bedeutet, dass der Fahrzeugführer bei einer manuellen Betätigung der Lenkeinrichtung mittels eines Bedienelements, regelmäßig ein Lenkrad, das Vorhandensein der Vorrichtung nicht wahrnimmt. Das Lenkgefühl bleibt also völlig oder zumindest im Wesentlichen unverändert. Tritt eine Situation ein, in der eine zentrale Überwachungseinrichtung des Kraftfahrzeugs die Notwendigkeit eines unterstützenden Eingriffs in die Lenkeinrichtung ermittelt, so wird die Wirkvorrichtung aktiv geschaltet, das heißt, sie übt eine elektromagnetische Kraft auf das Gegenelement aus. Da die Wirkvorrichtung in Bezug auf das Fahrzeug im Wesentlichen ortsfest ist, entsteht eine Kraft, die darauf hinwirkt, das Gegenelement gegenüber der Wirkvorrichtung zu verlagern und damit die Lenkeinrichtung zu betätigen. Aufgrund gewisser Toleranzen innerhalb der Lenkeinrichtung und weiterer Kräfte und Momente, die auf die Lenkeinrichtung wirken, muss diese Kraftbeaufschlagung der Lenkeinrichtung nicht zwangsläufig zu einer Änderung des Lenkwinkels führen, wenngleich bei entsprechender Auslegung der Vorrichtung und der Steuerung der Wirkvorrichtung eine elektromagnetische Kraft bewirkt werden kann, die für eine Änderung des Lenkwinkels ausreicht. Die Wirkvorrichtung kann auch zwischen verschiedenen Ansteuerzuständen geschaltet werden, so dass sich im zeitlichen Verlauf Kraftbeaufschlagungen mit verschieden großen Beträgen und/oder in verschiedene Richtungen ergeben. Dadurch kann eine wechselnde Verlagerung der Lenkeinrichtung oder in Teilen davon ausgelöst werden, insbesondere in Form eines Vibrierens, Oszillierens, Rüttelns oder Schüttelns, die vom Fahrzeugführer wahrnehmbar ist, insbesondere indem er durch seine das Lenkrad führende Hand diese wechselnde Verlagerung fühlt/spürt. Die letztgenannte Variante der Signalisierung hat zudem den Vorteil, dass die von der Vorrichtung ausgehende Warnfunktion für weitere Fahrzeuginsassen im Wesentlichen unbemerkt bleibt, so dass das Warnsignal in Situationen, in denen der Fahrzeugführer beispielsweise die Spur bewusst verlässt oder bewusst eine Linie überfährt, nicht ein unnötiges Unsicherheitsgefühl bei den Fahrzeuginsassen hervorruft. Es sei darauf hingewiesen, dass die wechselnde Verlagerung auch mit einer gezielten Beaufschlagung zur Änderung des Lenkwinkels kombiniert werden kann. Dadurch wird der Fahrer auf eine mögliche Gefahrensituation hingewiesen und gleichzeitig die zur Verringerung oder Abwehr der Gefahr erforderliche Änderung des Lenkwinkels vorgenommen. Die Ausgestaltung des Gegenelements kann auf vielfältige Weise erfolgen, solange die von der Wirkvorrichtung erzeugte elektromagnetische Kraft zur Kraftbeaufschlagung der Lenkeinrichtung führt. Falls die Lenkeinrichtung bereits über einen elektromagnetisch beeinflussbaren Bereich (oder mehrere) verfügt, so kann auf ein zusätzliches Gegenelement verzichtet werden, da das Gegenelement im Sinne der Erfindung dann bereits in der Lenkeinrichtung realisiert ist, das heißt der Lenkeinrichtung zugehörig ist.

Die elektrische Speisung der Induktionsanordnung erfolgt aus einem Energiespeicher, der als Kondensator ausgeführt ist, mit einer auf eine maximal gewünschte Wirkung der Vorrichtung abgestimmten Kapazität. Somit kann sichergestellt werden, dass die Vorrichtung - auch im Fehlerfall - nur eine begrenzte Kraftbeaufschlagung der Lenkeinrichtung bewirken kann. Dabei sind eine maximale Zeitdauer von einer Sekunde bis fünf Sekunden, bevorzugt von ca. drei Sekunden, und/oder eine maximale Änderung des Lenkwinkels von 10 bis 50 Grad, bevorzugt 30 Grad, vorgesehen.

Die Induktionsanordnung weist mehrere als Spulen ausgebildete Induktionselemente auf. Dies ermöglicht es, insbesondere bei einem zeitversetzten Schalten der Induktionselemente, vielfältige Muster der Kraftbeaufschlagung auf das Gegenelement wirken zu lassen.

Die Induktionselemente sind entlang eines zur Lenksäule im Wesentlichen konzentrischen Kreisbogens angeordnet Dadurch ergibt sich eine besonders kompakte Anordnung bei gleichzeitig hohem Wirkungsgrad. Das Gegenelement ist an der Lenksäule angeordnet.

Vorteilhafterweise ist die Wirkvorrichtung einer Lenksäule der Lenkeinrichtung zugeordnet. Das Gegenelement ist an der Lenksäule angeordnet oder ihr zugehörig. Dadurch ergibt sich eine besonders günstige Anordnung der Vorrichtung. So kann die Wirkvorrichtung in ein existierendes Schaltermodul integriert werden. Eine Kraftbeaufschlagung wirkt dann bevorzugt als ein Drehmoment auf die Lenksäule.

Mit Vorteil weist die Vorrichtung eine den Ladezustand des Energiespeichers überwachende Ladekontrolleinrichtung auf. Es kann dabei einerseits überwacht werden, ob der Ladezustand für die Funktionstüchtigkeit der Vorrichtung ausreicht und andererseits, ob der maximal vorgegebene Spannungspegel des Energiespeichers eingehalten wird. Wird eine Abweichung vom Sollzustand ermittelt, so können Hinweise auf eine Fehlfunktion gegeben und/oder ein Abschalten der Vorrichtung durchgeführt werden.

Ferner betrifft die Erfindung ein Verfahren zur Kraftbeaufschlagung einer eine Lenksäule aufweisenden Lenkeinrichtung, insbesondere mit einer Vorrichtung nach einem der vorhergehenden Ansprüche, wobei ein an der Lenkeinrichtung angeordnetes, mindestens einen elektromagnetisch beeinflussbaren Bereich aufweisendes Gegenelement von einer eine elektromagnetische Kraft erzeugenden Wirkvorrichtung verlagert wird, wobei die Wirkvorrichtung eine die elektromagnetische Kraft bewirkende Induktionsanordnung aufweist, wobei das Gegenelement mindestens einen elektromagnetisch beeinflussbaren Bereich aufweist, sodass eine das Gegenelement gegenüber der Wirkvorrichtung verlagernde Kraft bewirkt werden kann zur Kraftbeaufschlagung der Lenkeinrichtung, und wobei ein Energiespeicher als ein Kondensator ausgeführt wird, aus dem die elektrische Speisung der Induktionsanordnung erfolgt. Erfindungsgemäß ist dabei vorgesehen, dass die elektrische Speisung der Induktionsanordnung aus dem als Kondensator ausgebildeten Energiespeicher mit einer auf eine maximal gewünschte Wirkung der Vorrichtung abgestimmten Kapazität derart erfolgt, dass die Kraftbeaufschlagung der Lenkeinrichtung auf eine maximale Zeitdauer von 1 bis 5 Sekunden und/oder auf eine maximale Änderung des Lenkwinkels von 10 bis 50 Grad begrenzt ist, dass die Induktionsanordnung mehrere Spulen aufweist, die nur entlang eines zur Lenksäule im Wesentlichen konzentrischen, die Größe der maximalen Änderung des Lenkwinkels aufweisenden Kreisbogens angeordnet werden, und dass das Gegenelement an der Lenksäule angeordnet wird.

Vorteilhafterweise führt das Gegenelement durch die Kraftbeaufschlagung eine rotatorische Verlagerung durch. Ist das Gegenelement an einer Lenksäule der Lenkeinrichtung angeordnet, dann kann sich das Gegenelement insbesondere auf einer Kreisbahn um die zentrale Achse der Lenksäule verlagern. Dabei ergibt sich ein besonders geeignetes Zusammenspiel mit der Wirkvorrichtung, wenn die Induktionselemente entlang einer zweiten Kreisbahn um die zentrale Achse der Lenksäule und radial zumindest geringfügig vom Gegenelement beabstandet angeordnet sind. Der Begriff der rotatorischen Verlagerung ist dabei als eine, auch sehr geringe, Bewegung des Gegenelements auf einer zumindest ungefähren Kreisbahn zu verstehen.

Bei einer bevorzugten Weiterbildung der Erfindung erfolgt die rotatorische Verlagerung in wechselnde Richtungen. Dadurch lässt sich das zuvor erläuterte Vibrieren, Oszillieren, Rütteln oder Schütteln einfach realisieren.

Mit Vorteil wird das mindestens eine der Wirkvorrichtung zugeordnete Induktionselement von einer Steuer- oder Regeleinheit mit einem über der Zeit variierbaren Ansteuersignal angesteuert. Dadurch lassen sich vielfältige Muster der Kraftbeaufschlagung auf das Gegenelement realisieren. Insbesondere kann durch eine geeignete Bestromung, üblicherweise mehrerer Induktionselemente, eine kontinuierliche, gleichgerichtete Kraftbeaufschlagung, ähnlich des Wirkprinzips einer elektrischen Maschine, und/oder die zuvor beschriebe wechselnde Verlagerung bewirkt werden. Werden mehrere Induktionselemente verwendet, was üblicherweise der Fall sein wird, so kann jedes über ein eigenes Ansteuersignal angesteuert werden oder auch eine gruppenweise Ansteuerung mehrerer Induktionselemente erfolgen.

Es ist vorteilhaft, wenn mindestens ein Verlauf des Ansteuersignals gespeichert ist. Somit können gewünschte Verläufe im Voraus bestimmt oder berechnet werden, so dass bei einer Aktivierung der Wirkvorrichtung lediglich der gespeicherte Verlauf abgerufen wird.

Gemäß einer Weiterbildung des Verfahrens ist mindestens ein Verlauf des Ansteuersignals derart ausgestaltet, dass eine Abfolge mehrerer, mittels des Ansteuersignals hervorgerufener Kraftbeaufschlagungen in einem im Wesentlichen unveränderten Lenkwinkel der Lenkeinrichtung resultiert. Auf diese Weise kann der Fahrer über eine mögliche Gefahrensituation informiert werden, ohne dass ein effektiver Eingriff in die Lenkeinrichtung, insbesondere hinsichtlich des Lenkwinkels, erfolgt.

Mit Vorteil ist mindestens ein Verlauf des Ansteuersignals derart ausgestaltet, dass eine Abfolge mehrerer, mittels des Ansteuersignals hervorgerufener Kraftbeaufschlagungen in einem veränderten Lenkwinkel der Lenkeinrichtung resultiert. Dadurch kann eine Korrektur oder Vorkorrektur des Lenkwinkels erfolgen, um das Fahrzeug wieder in Richtung des gewünschten Fahrzustands zu bewegen. Zudem kann das effektive Moment, welches die Lenkeinrichtung beeinflusst, dem Fahrer, der das mit der Lenkeinrichtung wirkverbundene Lenkrad festhält, einen Hinweis darauf geben, in welche Richtung der Lenkwinkel zu korrigieren ist. Droht beispielsweise das Fahrzeug die rechte Fahrspurbegrenzung zu überfahren, so kann durch ein Drehmoment, welches unter anderem am Lenkrad als Drehmoment gegen den Uhrzeigersinn wirkt, dem Fahrer signalisiert werden, dass er weiter nach links fahren muss.

Vorteilhafterweise wird ein aufgrund der Kraftbeaufschlagung der Lenkeinrichtung erwarteter Lenkwinkel mit einem tatsächlichen Lenkwinkel verglichen. Dadurch lassen sich unerwartete Betriebsbedingungen erkennen und -je nach Bedarf- Gegenmaßnahmen einleiten.

Bevorzugt wird die Wirkvorrichtung wirkungslos geschaltet, wenn der Differenzbetrag zwischen erwartetem und tatsächlichem Lenkwinkel einen bestimmten Schwellenwert überschreitet. Es kann die Situation eintreten, dass die zentrale Überwachungseinrichtung des Kraftfahrzeugs die Notwendigkeit einer Korrektur des Lenkwinkels ermittelt und die Vorrichtung aktiviert, der Fahrer aber bewusst an der bestehenden Fahrsituation festhalten möchte, beispielsweise hat der Fahrer bewusst die Fahrspurbegrenzung überfahren. In dieser Situation hält der Fahrer das Lenkrad fest, so dass er der Kraftbeaufschlagung der Lenkeinrichtung durch die Vorrichtung eine Kraft entgegensetzt. Dadurch wird die definierte Kraftbeaufschlagung nicht zu dem Lenkwinkel führen, der zu erwarten gewesen wäre. Da die Funktion der Vorrichtung dem Willen des Fahrers nachrangig bleiben muss, wird die Wirkvorrichtung im geschilderten Fall wirkungslos geschaltet.

Ferner ist es vorteilhaft, dass eine Ladekontrolleinrichtung den Ladezustand eines der Wirkvorrichtung zugeordneten Energiespeichers überwacht und bei Erkennung eines Fehlerfalls die Wirkvorrichtung abschaltet und/oder den Energiespeicher entleert. Sollte der Ladezustand des Energiespeichers außerhalb eines Sollbereichs, insbesondere darüber liegen, so wird die Wirkvorrichtung wirkungslos geschaltet. Im Falle einer zu großen Spannung des Energiespeichers könnte die Wirkvorrichtung sonst eine zu große Kraftbeaufschlagung bewirken.

### Zeichnung

Die Erfindung wird nun anhand eines Ausführungsbeispiels näher erläutert. Dabei zeigt die
- Figur: eine Vorrichtung zur Kraftbeaufschlagung einer Lenkeinrichtung.

### Beschreibung des Ausführungsbeispiels

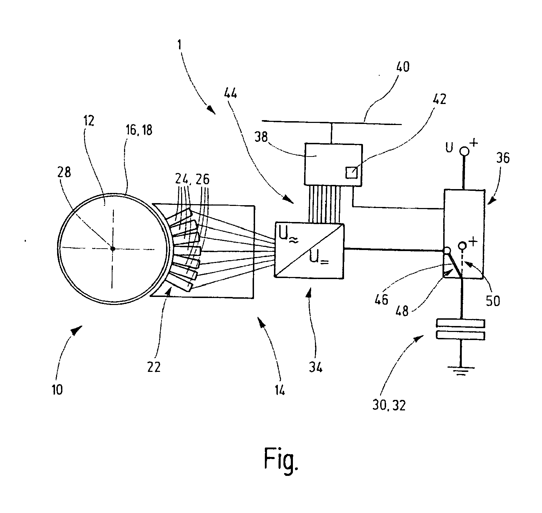

Die Figur zeigt eine Vorrichtung 1 zur Kraftbeaufschlagung einer Lenkeinrichtung 10, hier über eine Lenksäule 12, aufweisend eine der Lenkeinrichtung 10 zugeordnete Wirkvorrichtung 14 und ein an der Lenkeinrichtung 10 angeordnetes Gegenelement 16. Das Gegenelement 16 weist mindestens einen elektromagnetisch beeinflussbaren Bereich 18 auf, der entsprechend der zuvor allgemein beschriebenen Funktionsweise ausgebildet ist. Die Wirkvorrichtung 14 mit einer Induktionsanordnung 22, hier aus mehreren Induktionselementen 24 beziehungsweise Spulen 26 gebildet, übt bei entsprechender Ansteuerung eine elektromagnetische Kraft auf das Gegenelement 16 und damit ein Drehmoment auf die Lenksäule 12 um die zentrale Achse 28 der Lenksäule 12 aus. Die Induklionselemente 24 sind entlang eines zur Lenksäule 12 im Wesentlichen konzentrischen Kreisbogens angeordnet und vom Gegenelement 16 beabstandet. Die elektrische Speisung der Induktionsanordnung 22 erfolgt aus einem Energiespeicher 30, der hier als Kondensator 32 ausgebildet ist, über eine Umrichtvorrichtung 34. Die Ladung des Kondensators 32 erfolgt mittels einer Ladeeinheit 36, die an eine Spannung U angeschlossen ist. Eine Steuereinheit 38, gegebenenfalls auch als Regeleinheit ausgeführt, wertet Signale aus einem Informationsübertragungssystem 40 aus, überwacht mittels einer integrierten Ladekontrolleinrichtung 42 den Ladezustand des Kondensators 32 und die Funktion der Ladeeinheit 36 und steuert im Bedarfsfall die Umrichtvorrichtung 34 über Steuerleitungen 44 an. Die Ladeeinheit 36 weist einen Schalter 46 auf, der zwischen einer ersten, mit einer durchgezogenen Linie dargestellten Stellung 48 und einer zweiten, mit einer gestrichelten Linie dargestellten Stellung 50 geschaltet werden kann. In der ersten Stellung 48 besteht eine elektrische Verbindung zwischen dem Kondensator 32 und der Umrichtvorrichtung 34, wobei Kondensator 32 und Umrichtvorrichtung 34 von der Spannung U abgekoppelt sind. (Die Spannungsversorgung wurde hier symbolisch erneut in der Ladeeinheit 36 dargestellt, um das Prinzip der Funktionsweise zu verdeutlichen). Im Vergleich dazu besteht in der zweiten Stellung 50 eine elektrische Verbindung zwischen dem Kondensator 32 und der Spannungsversorgung, wobei die Umrichtvorrichtung 34 sowohl von der Spannungsversorgung als auch vom Kondensator 32 abgekoppelt ist. Dies bedeutet, dass die Umrichtvorrichtung 34 immer nur aus dem Kondensator 32 mit begrenzter Kapazität gespeist werden kann und eine unkontrollierte Verbindung mit der Spannungsversorgung (Spannung U), die gewissermaßen eine nahezu unbegrenzte Energiequelle darstellt, ausgeschlossen ist. Die Funktionsweise der Vorrichtung 1 wird nachfolgend beschrieben.

Initial wird über ein externes Signal der Ladevorgang des Kondensators 32 über die Ladeeinheit 36 angestoßen. Dabei befindet sich der Schalter 46 in der zweiten Stellung 50. Mit dem Erreichen einer vorgegebenen Sollspannung wird der Ladevorgang beendet und der Schalter 46 wird in die erste Stellung 48 bewegt. Die Vorrichtung 1 ist nun betriebsbereit. Erfasst die Steuereinheit 38 aus dem Informationsübertragungssystem 40 ein Signal, welches die Aktivität der Vorrichtung 1 anfordert, steuert die Steuereinheit 38 über die Steuerleitungen 44 die Umrichtvorrichtung 34 an. Dabei erfolgt die Ansteuerung anhand von in der Steuereinheit 38 gespeicherten Verläufen beziehungsweise Signalfolgen. Die Steuereinheit 38 kann auch auf unterschiedliche Situationen mit verschiedenen Signalfolgen reagieren. Die Funktion einer Umrichtvorrichtung 34 ist an sich bekannt und soll nicht näher erläutert werden. In dem gezeigten Ausführungsbeispiel wird mittels geeigneter Schaltanordnungen in der Umrichtvorrichtung 34 aus einer Gleichspannung U₌ eine Wechselspannung, hier ein Drehstrom U_{≈}, erzeugt. Dadurch wird an der Lenksäule 12 eine Schüttelbewegung bewirkt, die wahlweise ein resultierendes Restmoment zur Lenkwinkelkorrektur ergibt. Nur ein gezieltes Ansteuern der Spulen 26 ergibt ein solches Restmoment, so dass beispielsweise in den Fehlerfällen einer zufälligen Ansteuerung oder bei einem Verharren der Signalfolgen auf einem festen Pegel kein kontinuierliches Restmoment auftritt.

Zusammengefasst, zeichnet sich die Erfindung insbesondere durch folgende Vorteile aus:
- Bei deaktivierter Vorrichtung 1 ergibt sich gegenüber einer Lenkeinrichtung 10 ohne eine Vorrichtung 1 ein unverändertes Lenkgefühl.
- Durch die indirekte Speisung der Wirkvorrichtung 14 hält sich die maximal mögliche Kraftbeaufschlagung in definierten Grenzen.
- Da zu keinem Zeitpunkt die Umrichtvorrichtung 34 direkt an die Spannung U angeschlossen ist, kann die Spannung U nie eine direkte Bestromung der Spulen 26 bewirken.
- Die Ladekontrolle stellt sicher, dass der Energiespeicher 30 nur auf einen definierten Pegel geladen wird.
- Eine effektive Kraftbeaufschlagung der Lenkeinrichtung 10 erfolgt nur bei gezielten Bestromungsmustern der Spulen 26. Eine zufällige oder zeitlich invariante Bestromung führt nicht zu einer kontinuierlichen Kraftbeaufschlagung.

Es handelt sich also um eine sehr sichere Vorrichtung 1, die bei Inaktivität unbemerkt bleibt.

## Patentansprüche

1. Verfahren zur Kraftbeaufschlagung einer Lenkeinrichtung (10), wobei ein an der Lenkeinrichtung (10) angeordnetes, mindestens einen elektromagnetisch beeinflussbaren Bereich (18) aufweisendes Gegenelement (16) von einer eine elektromagnetische Kraft erzeugenden Wirkvorrichtung (14) verlagert wird, **dadurch gekennzeichnet, dass** die elektrische Speisung der Induktionsanordnung der Lenkeinrichtung (22) aus einem als ein Kondensator ausgebildeter Energiespeicher (30) mit einer auf eine maximal gewünschte Wirkung der Vorrichtung (1) abgestimmten Kapazität derart erfolgt, dass die Kraftbeaufschlagung der Lenkeinrichtung auf eine maximale Zeitdauer von einer bis fünf Sekunden und/oder auf eine maximale Änderung des Lenkwinkels von 10 bis 50 Grad begrenzt ist, und dass eine Ladekontrolleinrichtung (42) den Ladezustand des der Wirkvorrichtung (14) zugeordneten Kondensators (32) überwacht und bei Erkennung eines Fehlerfalls die Wirkvorrichtung (14) abschaltet und/oder den Kondensator (32) entleert.

2. Verfahren nach Anspruch 1, **dadurch gekennzeichnet, dass** das Gegenelement (16) durch die Kraftbeaufschlagung eine rotatorische Verlagerung durchführt.

3. Verfahren nach einem der vorhergehenden Ansprüche, **dadurch gekennzeichnet, dass** die rotatorische Verlagerung in wechselnde Richtungen erfolgt.

4. Verfahren nach einem der vorhergehenden Ansprüche, **dadurch gekennzeichnet, dass** mindestens ein der Wirkvorrichtung (14) zugeordnetes Induktionselement (24), insbesondere eine Spule (26), von einer Steuer- oder Regeleinheit (38) mit einem über der Zeit variierbaren Ansteuersignal angesteuert wird.

5. Verfahren nach einem der vorhergehenden Ansprüche, **dadurch gekennzeichnet, dass** mindestens ein Verlauf des Ansteuersignals gespeichert ist.

6. Verfahren nach einem der vorhergehenden Ansprüche, **dadurch gekennzeichnet, dass** mindestens ein Verlauf des Ansteuersignals derart ausgestaltet ist, dass eine Abfolge mehrerer, mittels des Ansteuersignals hervorgerufener Kraftbeaufschlagungen in einem im Wesentlichen unveränderten Lenkwinkel der Lenkeinrichtung (10) resultiert.

7. Verfahren nach einem der vorhergehenden Ansprüche, **dadurch gekennzeichnet, dass** mindestens ein Verlauf des Ansteuersignals derart ausgestaltet ist, dass eine Abfolge mehrerer, mittels des Ansteuersignals hervorgerufener Kraftbeaufschlagungen in einem veränderten Lenkwinkel der Lenkeinrichtung (10) resultiert.

8. Verfahren nach einem der vorhergehenden Ansprüche, **dadurch gekennzeichnet, dass** ein aufgrund der Kraftbeaufschlagung der Lenkeinrichtung (10) erwarteter Lenkwinkel mit einem tatsächlichen Lenkwinkel verglichen wird.

9. Verfahren nach Anspruch 8, **dadurch gekennzeichnet, dass** die Wirkvorrichtung (14) wirkungslos geschaltet wird, wenn der Differenzbetrag zwischen erwartetem und tatsächlichem Lenkwinkel einen bestimmten Schwellenwert überschreitet.

## Claims

1. Method for applying force to a steering device (10), an opposing element (16), which is arranged on the steering device (10) and has at least one region (18) which can be influenced electromagnetically, is moved by an action device (14) which generates an electromagnetic force, **characterized in that** the induction arrangement (22) of the steering device is supplied with electricity from an energy store (30) which is embodied as a capacitor and has a capacitance which is matched to a maximum desired effect of the device (1), in such a way that the application of force to the steering device is limited to a maximum time period of one to five seconds and/or to a maximum change in the steering angle from ten to fifty degrees, and **in that** a charge monitoring device (42) monitors the charge state of the capacitor (32) which is assigned to the action device (14) and switches off the action device (14) and/or discharges the capacitor (32) when a fault situation is detected.

2. Method according to Claim 1, **characterized in that** the opposing element (16) carries out a rotational movement as a result of the application of force.

3. Method according to one of the preceding claims, **characterized in that** the rotational movement takes place in alternating directions.

4. Method according to one of the preceding claims, **characterized in that** at least one induction element (24), in particular a coil (26), which is assigned to the action device (14), is actuated by an open-loop or closed-loop control unit (38) with an actuation signal which can vary over time.

5. Method according to one of the preceding claims, **characterized in that** at least one profile of the actuation signal is stored.

6. Method according to one of the preceding claims, **characterized in that** at least one profile of the actuation signal is configured in such a way that a sequence of a plurality of applications of force which are brought about by means of the actuation signal results in an essentially unchanged steering angle of the steering device (10).

7. Method according to one of the preceding claims, **characterized in that** at least one profile of the actuation signal is configured in such a way that a sequence of a plurality of applications of force which are brought about by means of the actuation signal results in a changed steering angle of the steering device (10).

8. Method according to one of the preceding claims, **characterized in that** a steering angle which is expected owing to the application of force to the steering device (10) is compared with an actual steering angle.

9. Method according to Claim 8, **characterized in that** the action device (14) is deactivated if the absolute value of the difference between the expected steering angle and the actual steering angle exceeds a specific threshold value.

## Revendications

1. Procédé d'application d'une force à un dispositif de direction (10), un contre-élément (16) disposé sur le dispositif de direction (10) et présentant au moins une zone (18) pouvant être influencée de manière électromagnétique étant déplacé par un dispositif d'action (14) qui génère une force électromagnétique, **caractérisé en ce que** l'alimentation électrique de l'arrangement inductif (22) du dispositif de direction s'effectue à partir d'un accumulateur d'énergie (30) réalisé sous la forme d'un condensateur ayant une capacité adaptée à une action maximale souhaitée du dispositif (1), de telle sorte que l'application de la force au dispositif de direction soit limitée à une durée maximale d'une à cinq secondes et/ou à une modification maximale de l'angle de direction de 10 à 50 degrés, et **en ce qu'**un dispositif de contrôle de charge (42) surveille l'état de charge du condensateur (32) associé au dispositif d'action (14) et, en cas de détection d'une situation de défaut, déconnecte le dispositif d'action (14) et/ou vide le condensateur (32).

2. Procédé selon la revendication 1, **caractérisé en ce que** le contre-élément (16), par l'application de la force, exécute un changement de position en rotation.

3. Procédé selon l'une des revendications précédentes, **caractérisé en ce que** le changement de position en rotation a lieu dans des directions alternées.

4. Procédé selon l'une des revendications précédentes, **caractérisé en ce qu'**au moins un élément inductif (24) associé au dispositif d'action (14), notamment une bobine (26), est commandé par une unité de contrôle ou de régulation (38) avec un signal de commande qui peut varier dans le temps.

5. Procédé selon l'une des revendications précédentes, **caractérisé en ce qu'**au moins une courbe du signal de commande est enregistrée.

6. Procédé selon l'une des revendications précédentes, **caractérisé en ce qu'**au moins une courbe du signal de commande est configurée de telle sorte qu'une succession de plusieurs applications de la force provoquées au moyen du signal de commande résulte en un angle de direction sensiblement inchangé du dispositif de direction (10).

7. Procédé selon l'une des revendications précédentes, **caractérisé en ce qu'**au moins une courbe du signal de commande est configurée de telle sorte qu'une succession de plusieurs applications de la force provoquées au moyen du signal de commande résulte en un angle de direction modifié du dispositif de direction (10).

8. Procédé selon l'une des revendications précédentes, **caractérisé en ce qu'**un angle de direction attendu en raison de l'application de la force au dispositif de direction (10) est comparé avec un angle de direction réel.

9. Procédé selon la revendication 8, **caractérisé en ce que** le dispositif d'action (14) est désactivé lorsque la différence absolue entre les angles de direction attendu et réel dépasse une valeur de seuil donnée.
